(19) Europäisches Patentamt
European Patent Office
Office européen des brevets

(11) EP 2 241 600 B1

(12) **EUROPEAN PATENT SPECIFICATION**

(45) Date of publication and mention of the grant of the patent:
**02.10.2013 Bulletin 2013/40**

(51) Int Cl.:
***C09B 67/10*** *(2006.01)* ***C09B 67/48*** *(2006.01)*
***G03G 9/09*** *(2006.01)*

(21) Application number: **10003467.7**

(22) Date of filing: **30.03.2010**

(54) **Pigment, method of producing pigment, pigment dispersion, and yellow toner**

Pigment, Verfahren zur Herstellung des Pigments, Pigmentdispersion und Gelbtoner

Pigment, procédé de production de pigment, dispersion de pigment et toner jaune

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.04.2009 JP 2009101051**

(43) Date of publication of application:
**20.10.2010 Bulletin 2010/42**

(73) Proprietor: **Canon Kabushiki Kaisha**
**Tokyo (JP)**

(72) Inventors:
- **Toyoda, Takayuki**
  **Tokyo (JP)**
- **Inoue, Kei**
  **Tokyo (JP)**
- **Shintou, Taichi**
  **Tokyo (JP)**
- **Tani, Yutaka**
  **Tokyo (JP)**
- **Murai, Yasuaki**
  **Tokyo (JP)**
- **Hirose, Masashi**
  **Tokyo (JP)**

(74) Representative: **Weser, Thilo**
**Weser & Kollegen**
**Patentanwälte**
**Radeckestrasse 43**
**81245 München (DE)**

(56) References cited:
**EP-A1- 0 908 789** **EP-A1- 1 834 996**
**US-A- 4 003 886**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 241 600 B1

## Description

BACKGROUND OF THE INVENTION

Field of the Invention

The present invention relates to a pigment; a method of producing the pigment; a pigment dispersion containing the pigment; and a yellow toner, containing the pigment, for use in recording processes such as electrophotographic processes, electrostatic recording processes, magnetic recording processes, and toner jet processes, the pigment being used as a colorant.

Description of the Related Art

In recent years, color images have become popular. Therefore, there are increasing demands for high-quality color images. In a digital full-color copier or printer, after an original color image is color-separated with a blue filter, a green filter, and a red filter, a latent image having dots with a diameter of 20 to 70 $\mu$m is developed with a yellow developer, a magenta developer, a cyan developer, and a black developer on the basis of the original color image. Therefore, colorants contained in color developers have significant effects on image quality.

In the field of paints, yellow colorants with a large primary particle size are widely used because the yellow colorants need to have high hiding power and high tinting strength so as to make substantially the same impression as those of other colors on human sensitivities. In the field of toners, colorants contained in the toners need to have high tinting strength and high transparency, which are important properties of the toners. It is difficult for conventional colorants, preferred in the toner field, having a large primary particle size to simultaneously meet these requirements.

Japanese Patent No. 3917764 (hereinafter referred to as Patent Document 1) discloses a toner colorant containing C. I. Pigment Yellow 155. This document describes that C. I. Pigment Yellow 155 has high thermal stability, high dispersibility in resins, and good electrostatic properties.

British Patent No. 2,239,254 (hereinafter referred to as Patent Document 2) and U.S. Patent No. 4,003,886 (hereinafter referred to as Patent Document 3) disclose pigment post-treating processes for enhancing the tinting strength, dispersibility, and light resistance of C. I. Pigment Yellow 155. In particular, these documents each disclose, for example, a process in which a crude synthesized pigment is heated in dimethylformamide or o-dichlorobenzene at a temperature of 130°C to 135°C. Pigments obtained by these processes have low crystallinity. Any pigments having satisfactory tinting strength, dispersion viscosity, and light resistance cannot be obtained by these processes.

Japanese Patent Laid-Open No. 2007-262382 (hereinafter referred to as Patent Document 4) discloses a process in which a crude synthesized pigment is post-treated at an elevated temperature of 60°C or higher and an alkaline pH in a mixture of water and an organic solvent in the presence of a pigment dispersant. A pigment obtained by this process has insufficient dispersibility in organic solvents, particularly in nonpolar solvents, and is problematic with tinting strength and transparency for toner applications.

None of Patent Documents 1 to 4 describes that a dispersion prepared by dispersing C. I. Pigment Yellow 155 in a dispersion medium such as an organic solvent has an increased viscosity.

SUMMARY OF THE INVENTION

A pigment according to aspects of the present invention is represented by the following formula and has a CuK$\alpha$ characteristic X-ray diffraction spectrum having, when $\theta$ represents a Bragg angle, a peak at $2\theta \pm 0.20$ degrees equal to 10.0 degrees and a peak at $2\theta \pm 0.20$ degrees equal to 11.1 degrees, the intensity ratio of the 11.1 degree peak to the 10.0 degree peak being 0.7 or more:

The present invention in its first aspect provides a pigment as specified in claims 1 to 3.

The present invention in its second aspect provides a method of producing the pigment as specified in claims 4 and 5.

The present invention in its third aspect provides a pigment dispersion as specified in claims 6 and 7.

The present invention in its fourth aspect provides a yellow toner as specified in claims 8 and 9.

Further features of the present invention will become apparent from the following description of exemplary embodiments with reference to the attached drawing.

BRIEF DESCRIPTION OF THE DRAWING

The figure is a graph showing the powder X-ray diffraction spectrum of a pigment according to the present invention.

DESCRIPTION OF THE EMBODIMENTS

Embodiments of the present invention will now be described in detail.

The inventors have made intensive investigations to solve the conventional problems. As a result, the inventors have found that a pigment represented by the following formula is capable of preventing a dispersion prepared by dispersing the pigment in a dispersion medium such as an organic solvent from having an increased viscosity, the dispersion can be readily handled, the dispersion of the pigment in the dispersion medium is high, and the pigment has increased tinting strength:

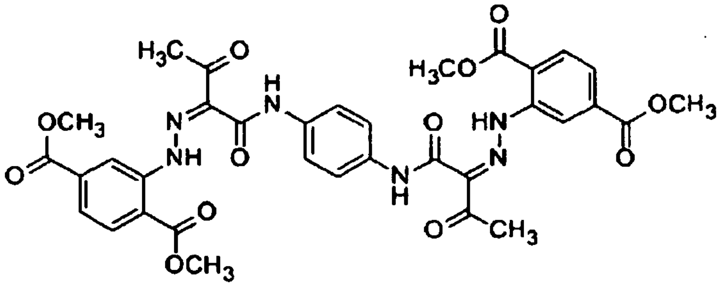

(1) .

The pigment has a CuKα characteristic X-ray diffraction spectrum having, when θ represents a Bragg angle, a peak at 2θ ± 0.20 degrees equal to 10.0 degrees and a peak at 2θ ± 0.20 degrees equal to 11.1 degrees. The intensity ratio of the 11.1 degree peak to the 10.0 degree peak is 0.7 or more.

The use of the pigment in a colorant for toners improves the handling of the colorant during steps of producing a toner and allows the dispersion of the colorant to be kept well. The inventors have found that the use of the pigment is effective in providing a yellow toner having high tinting strength. This has led to the completion of the present invention.

A compound which is used herein and which is represented by Formula (1) is a bis-acetoacetanilide-based pigment and is classified as C. I. Pigment Yellow 155.

C. I. Pigment Yellow 155 is a pigment having good light resistance and heat resistance. However, C. I. Pigment Yellow 155, as well as other azo pigments, has a problem in that a dispersion, prepared by dispersing C. I. Pigment Yellow 155 in a dispersion medium, having high tinting strength and transparency has an extremely increased viscosity because of the high affinity between particles of C. I. Pigment Yellow 155, and therefore is difficult to handle. Furthermore, there can be a problem in that the dispersion may be reduced in high tinting strength and transparency because of the re-aggregation of these particles.

The pigment represented by Formula (1) can be well dispersed in a dispersion medium such as an organic solvent or a polymerizable monomer and can be used to prepare a pigment dispersion with low viscosity because the adhesion between particles of the pigment is appropriately suppressed. The pigment dispersion is readily handled. Since the re-aggregation of the pigment particles can be suppressed, the pigment dispersion has high tinting strength.

A pigment according to the present invention can be produced in such a manner that the pigment represented by Formula (1) is heat-treated at 160°C or higher in a halogenated aromatic solvent. The halogenated aromatic solvent is characterized in having low polarity and a higher boiling point as compared to non-halogenated solvents. The inventors have found that the crystallization of the pigment is promoted by heat-treating the compound at an elevated temperature in a low-polarity solvent such as a halogenated aromatic solvent.

The pigment according to the present invention may be obtained by heat- treating commercially available C. I. Pigment Yellow 155 such as Toner Yellow 3GP available from Clariant (Japan) K.K. Alternatively, the pigment according to the present invention may be obtained as follows: the compound represented by Formula (1) is produced in such a manner that a compound (dimethyl aminoterephthalate) represented by the following formula (2) is diazotized and then coupled with a compound (1, 4- bis (acetoacetylamino) benzene) represented by the following formula (3) and the compound represented by Formula (1) is heat- treated in the halogenated aromatic solvent:

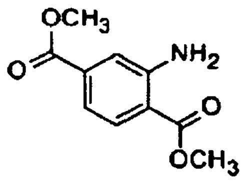

(2)

and

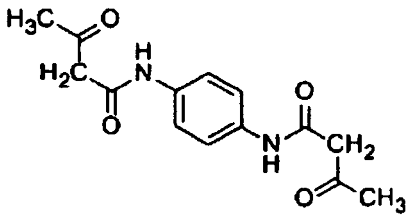

(3).

The diazo-coupling reaction of the compound represented by Formula (2) with the compound represented by Formula (3) can be carried out by a known process. In particular, the compound represented by Formula (2) is dispersed in ice-cooled water and then converted into a diazonium salt by allowing the compound represented by Formula (2) to react with a diazotizing agent such as sodium nitrite in the presence of an inorganic acid such as hydrochloric acid or sulfuric acid. The diazonium salt is coupled with the compound represented by Formula (3) in the presence of an inorganic salt such as sodium hydroxide, whereby the pigment represented by Formula (1) can be produced.

The halogenated aromatic solvent is not particularly limited and preferably does not affect the diazo- coupling reaction thereof. Examples of the halogenated aromatic solvent include chlorobenzenes such as chlorobenzene, o- dichlorobenzene, m- dichlorobenzene, p- dichlorobenzene, 1, 2, 3- trichlorobenzene, 1, 2, 4- trichlorobenzene, and 1, 3, 5- trichlorobenzene; chloromethylbenzenes such as 1- chloro- 2- methylbenzene and 1- chloro- 4- methylbenzene; chlorodimethylbenzenes such as 1- chloro- 2, 3- dimethylbenzene, 4- chloro- 1, 2- dimethylbenzene, and 2- chloro- 1, 3- dimethylbenzene; chloronaphthalenes such as 1- chloronaphthalene; bromobenzenes such as bromobenzene and dibromobenzenes; bromochlorobenzenes such as 2- bromochlorobenzene, 3- bromochlorobenzene, and 4- bromochlorobenzene; iodobenzenes such as iodobenzene and o- diiodobenzene; dichloromethylbenzenes such as 1, 2- dichloro- 3- methylbenzene, 2, 4- dichloro- 1- methylbenzene, 1, 4- dichloro- 2- methylbenzene, 1, 3- dichloro- 2- methylbenzene, 1, 2- dichloro- 4- methylbenzene, and 1, 3- dichloro- 5- methylbenzene; and dichlorofluorobenzenes such as 2, 4- dichlorofluorobenzene, 2, 5- dichlorofluorobenzene, 2, 6- dichlorofluorobenzene, and 1, 2- dichloro- 4- fluorobenzene. These solvents can be used alone or in combination.

The halogenated aromatic solvent can be arbitrarily selected from the above solvents. The halogenated aromatic solvent may be o- dichlorobenzene, m- dichlorobenzene, 1- chloro- 2- methylbenzene, 1, 2- dichloro- 3- methylbenzene, 2, 4- dichloro- 1- methylbenzene, 1, 4- dichloro- 2- methylbenzene, 1, 3- dichloro- 2- methylbenzene, 1, 2- dichloro- 4- methylbenzene, or 1, 3- dichloro- 5- methylbenzene and such as o- dichlorobenzene or m- dichlorobenzene.

The amount of the halogenated aromatic solvent used to produce the pigment according to the present invention may be 0.1 to 500 mass parts, such as 0.5 to 200 mass parts, and even such as two to 100 mass parts per mass part of the pigment according to the present invention.

A heating temperature for producing the pigment according to aspects of the present invention may be 160°C or higher and may even be 180°C or higher for the purpose of producing the pigment according to the present invention in a short time. When the heating temperature is lower than 160°C, the production cost of the pigment according to the present invention is high because the crystallization of the pigment according to the present invention proceeds slowly and therefore it takes a long time to produce the pigment according to the present invention; hence, it is difficult to produce the pigment according to the present invention such that the above problems are solved.

The time taken for heat treatment performed to produce the pigment according to the present invention is not particularly limited if the pigment according to the present invention can be produced so as to meet conditions specified herein. The time taken therefor is usually one to 36 hours and mostly 24 hours or less depending on the heating temperature, the scale of treatment, and a heater.

The pigment according to the present invention has a CuK$\alpha$ characteristic X-ray diffraction spectrum having, when $\theta$ represents a Bragg angle, a peak at $2\theta \pm 0.20$ degrees equal to 10.0 degrees and a peak at $2\theta \pm 0.20$ degrees equal to 11.1 degrees and the intensity ratio of the 11.1 degree peak to the 10.0 degree peak may be 0.7 or more and even 0.9 or more. When the intensity ratio of the 11.1 degree peak to the 10.0 degree peak is 0.9 or more, the pigment according to the present invention has high crystallinity and therefore a dispersion prepared by dispersing the pigment according to the present invention in a dispersion medium such as an organic solvent has a reduced viscosity and enhanced light resistance.

The pigment according to the present invention can be used in the form of a pigment dispersion prepared by dispersing the pigment according to the present invention in a dispersion medium such as an organic solvent. The use of the pigment according to the present invention is more effective in preventing the increase of the viscosity of the pigment dispersion (the dispersion viscosity of the pigment) than the use of conventional C. I. Pigment Yellow 155.

Therefore, the pigment dispersion can be readily handled and has high tinting strength because the pigment according to the present invention has good dispersibility.

The organic solvent, which is used to disperse the pigment according to the present invention, is not particularly limited and may be selected depending on purposes and/or uses of the pigment according to the present invention. Examples of the organic solvent include alcohols such as methyl alcohol, ethyl alcohol, denatured ethyl alcohol, isopropanol alcohol, n-butyl alcohol, i-butyl alcohol, tert-butyl alcohol, sec-butyl alcohol, tert-amyl alcohol, 3-pentanol, octyl alcohol, benzyl alcohol, and cyclohexanol; glycols such as methyl cellosolve, ethyl cellosolve, diethylene glycol, and diethylene glycol monobutyl ether; ketones such as acetone, methyl ethyl ketone, and methyl isobutyl ketone; esters such as ethyl acetate, butyl acetate, ethyl propionate, and cellosolve acetate; hydrocarbon solvents such as hexane, octane, petroleum ether, cyclohexane, benzene, toluene, and xylene; halogenated hydrocarbon solvents such as carbon tetrachloride, trichloroethylene, and tetrabromoethane; ethers such as diethyl ether, dimethyl glycol, trioxane, and tetrahydrofuran; acetals such as methylal and diethyl acetal; organic acids such as formic acid, acetic acid, and propionic acid; and sulfur- or nitrogen-containing organic compounds such as nitropropene, nitrobenzene, dimethylamine, monoethanolamine, pyridine, dimethyl sulfoxide, and dimethylformamide. In particular, at least one of the ketones, the esters, the hydrocarbon solvents, and the halogenated hydrocarbon solvents may be used because a low-polarity organic solvent may be provided herein.

The organic solvent may be a polymerizable monomer. The polymerizable monomer is preferably addition-polymerizable or condensation-polymerizable and more preferably addition-polymerizable. Examples of the polymerizable monomer include styrenic monomers such as styrene, o-methylstyrene, m-methylstyrene, p-methylstyrene, o-ethylstyrene, m-ethylstyrene, and p-ethylstyrene; acrylate monomers such as methyl acrylate, ethyl acrylate, propyl acrylate, butyl acrylate, octyl acrylate, dodecyl acrylate, stearyl acrylate, behenyl acrylate, 2-ethylhexyl acrylate, dimethylaminoethyl acrylate, diethylaminoethyl acrylate, acrylonitrile, and acrylamide; methacrylate monomers such as methyl methacrylate, ethyl methacrylate, propyl methacrylate, butyl methacrylate, octyl methacrylate, dodecyl methacrylate, stearyl methacrylate, behenyl methacrylate, 2-ethylhexyl methacrylate, dimethylaminoethyl methacrylate, diethylaminoethyl methacrylate, methacrylonitrile, and methacrylamide; olefinic monomers such as ethylene, propylene, butylene, butadiene, isoprene, isobutylene, and cyclohexene; vinyl halides such as vinyl chloride, vinylidene chloride, vinyl bromide, and vinyl iodide; vinyl esters such as vinyl acetate, vinyl propionate, and vinyl benzoate; vinyl ethers such as vinyl methyl ether, vinyl ethyl ether, and vinyl isobutyl ether; and vinyl ketones such as vinyl methyl ketone, vinyl hexyl ketone, and vinyl isopropenyl ketone.

The pigment dispersion may further contain a resin. Examples of the resin include polystyrene, styrene copolymers, polyacrylic acids, polymethacrylic acids, polyacrylates, polymethacrylates, acrylic copolymers, methacrylic copolymers, styrene-acrylic copolymers, styrene-methacrylic copolymers, polyesters, polyvinyl ethers, polyvinyl methyl ether, polyvinyl alcohol, polyvinyl butyral, polyurethane, and polypeptides. These resins may be used alone or in combination.

The pigment dispersion is prepared as described below. A pigment dispersant and/or the resin is dissolved in the dispersion medium as required. A powder of the pigment according to the present invention is slowly added to the solution while the solution is being agitated, whereby the pigment according to the present invention is sufficiently dispersed in the dispersion medium. A mechanical shear stress may be applied to the pigment dispersion with a disperser such as a ball mill, a paint shaker, a dissolver, an attritor, a sand mill, or a high-speed mill. This allows the pigment according to the present invention to be stably and uniformly dispersed in the dispersion medium.

The pigment according to the present invention can be used as a colorant and therefore can be used in a toner containing toner mother particles containing a binder resin and a wax component. The use of the pigment according to the present invention prevents the increase of the dispersion viscosity and therefore handling is easy during the production of the toner. The pigment according to the present invention has good dispersibility and therefore is useful in obtaining a yellow toner with high tinting strength.

Examples of the binder resin include commonly used styrene-acrylate copolymers, styrene-methacrylate copolymers, polyester resins, epoxy resins, and styrenebutadiene copolymers. In the case of directly producing the toner mother particles by polymerization, a monomer forming one of these copolymers and resins is used. Examples of the monomer include styrenic monomers such as styrene, o-methylstyrene, m-methylstyrene, p-methylstyrene, o-ethylstyrene, m-ethylstyrene, and p-ethylstyrene; acrylate monomers such as methyl acrylate, ethyl acrylate, propyl acrylate, butyl acrylate, octyl acrylate, dodecyl acrylate, stearyl acrylate, behenyl acrylate, 2-ethylhexyl acrylate, dimethylaminoethyl acrylate, diethylaminoethyl acrylate, acrylonitrile, and acrylamide; methacrylate monomers such as methyl methacrylate, ethyl methacrylate, propyl methacrylate, butyl methacrylate, octyl methacrylate, dodecyl methacrylate, stearyl methacrylate, behenyl methacrylate, 2-ethylhexyl methacrylate, dimethylaminoethyl methacrylate, diethylaminoethyl methacrylate, methacrylonitrile, and methacrylamide; and olefinic monomers such as butadiene, isoprene, and cyclohexene. These monomers are used alone or in combination as described in Polymer Handbook, Second Edition, John Wiley & Sons Inc., III, pp. 139-192 such that the binder resin has
a theoretical glass transition temperature (Tg) of 40°C to 75°C. When the binder resin has a theoretical glass transition

temperature of lower than 40°C, the toner is likely to have problems with storage stability and durability. When the binder resin has a theoretical glass transition temperature of higher than 75°C, a full-color image formed using the toner has low transparency.

In order to increase the mechanical strength of the toner mother particles and in order to control the molecular weight of molecules of the toner, a cross-linking agent may be used to synthesize the binder resin.

Examples of the cross- linking agent include bifunctional cross- linking agents such as divinylbenzene, 2, 2-bis (4- acryloxyethoxyphenyl) propane, ethylene glycol diacrylate, 1, 3- butylene glycol diacrylate, 1, 4- butanediol diacrylate, 1, 5- pentanediol diacrylate, 1, 6- hexanediol diacrylate, neopentyl glycol diacrylate, diethylene glycol diacrylate, triethylene glycol diacrylate, tetraethylene glycol diacrylate, polyethylene glycol #200 diacrylate, polyethylene glycol #400 diacrylate, polyethylene glycol #600 diacrylate, dipropylene glycol diacrylate, polypropylene glycol diacrylate, polyester diacrylates, ethylene glycol dimethacrylate, 1, 3- butylene glycol dimethacrylate, 1, 4- butanediol dimethacrylate, 1, 5- pentanediol dimethacrylate, 1, 6- hexanediol dimethacrylate, neopentyl glycol dimethacrylate, diethylene glycol dimethacrylate, triethylene glycol dimethacrylate, tetraethylene glycol dimethacrylate, polyethylene glycol #200 dimethacrylate, polyethylene glycol #400 dimethacrylate, polyethylene glycol #600 dimethacrylate, dipropylene glycol dimethacrylate, polypropylene glycol dimethacrylate, and polyester dimethacrylates.

Other examples of the cross-linking agent include tri- or more functional cross-linking agents such as pentaerythritol triacrylate, trimethylolethane triacrylate, trimethylolpropane triacrylate, tetramethylolmethane tetraacrylate, oligoester acrylates, oligoester methacrylates, triallyl cyanurate, triallyl isocyanurate, and triallyl trimellitate.

The amount of the cross-linking agent used may be 0.05 to ten mass parts and even 0.1 to five mass parts per 100 mass parts of the monomer.

The toner surely contains the pigment, which serves as a colorant, according to the present invention and may further contain a yellow colorant that does not inhibit the dispersion of the pigment according to the present invention.

Examples of the yellow colorant include various compounds such as condensed azo compounds, isoindolinone compounds, anthraquinone compounds, azo-metal complexes, methine compounds, and allylamide compounds. Particular examples of the yellow colorant include C. I. Pigment Yellow 12, C. I. Pigment Yellow 13, C. I. Pigment Yellow 14, C. I. Pigment Yellow 15, C. I. Pigment Yellow 17, C. I. Pigment Yellow 62, C. I. Pigment Yellow 74, C. I. Pigment Yellow 83, C. I. Pigment Yellow 93, C. I. Pigment Yellow 94, C. I. Pigment Yellow 95, C. I. Pigment Yellow 97, C. I. Pigment Yellow 109, C. I. Pigment Yellow 110, C. I. Pigment Yellow 111, C. I. Pigment Yellow 120, C. I. Pigment Yellow 127, C. I. Pigment Yellow 128, C. I. Pigment Yellow 129, C. I. Pigment Yellow 147, C. I. Pigment Yellow 151, C. I. Pigment Yellow 154, C. I. Pigment Yellow 168, C. I. Pigment Yellow 174, C. I. Pigment Yellow 175, C. I. Pigment Yellow 176, C. I. Pigment Yellow 180, C. I. Pigment Yellow 181, C. I. Pigment Yellow 191, C. I. Pigment Yellow 194, C. I. Pigment Yellow 213, C. I. Pigment Yellow 214, C. I. Vat Yellow 1, C. I. Vat Yellow 3, C. I. Vat Yellow 20, mineral fast yellow, navel yellow, Naphthol Yellow S, Hansa Yellow G, Permanent Yellow NCG, C. I. Solvent Yellow 9, C. I. Solvent Yellow 17, C. I. Solvent Yellow 24, C. I. Solvent Yellow 31, C. I. Solvent Yellow 35, C. I. Solvent Yellow 58, C. I. Solvent Yellow 93, C. I. Solvent Yellow 100, C. I. Solvent Yellow 102, C. I. Solvent Yellow 103, C. I. Solvent Yellow 105, C. I. Solvent Yellow 112, C. I. Solvent Yellow 162, and C. I. Solvent Yellow 163.

Examples of the wax component include petroleum waxes such as paraffin wax, microcrystalline wax, and petrolatum; derivatives of the petroleum waxes; montan wax; derivatives of montan wax; hydrocarbon waxes synthesized by the Fischer-Tropsch process; derivatives of the hydrocarbon waxes; polyolefin waxes such as polyethylene; derivatives of the polyolefin waxes; natural waxes such as carnauba wax and candelilla wax; and derivatives of the natural waxes. These derivatives include oxides, block copolymers of vinyl monomers and these waxes, and graft-modified waxes. Other examples of the wax component include alcohols such as higher aliphatic alcohols, esters of the alcohols, aliphatic acids such as stearic acid and palmitic acid, amides of the aliphatic acids, cured castor oil, derivatives of cured castor oil, plant waxes, and animal waxes. These compounds may be used alone or in combination.

In the toner, the toner mother particles may contain a charge control agent or may be coated with the charge control agent. This allows the triboelectricity of the toner mother particles to be optimally controlled depending on a developing system.

The charge control agent may be known one, is preferably charged at high speed, and is preferably capable of maintaining charge constant. In the case of producing the toner by direct polymerization, the charge control agent preferably has a low polymerization-inhibiting ability and is preferably substantially insoluble in aqueous dispersion media.

Examples of the charge control agent include agents capable of controlling the toner to be negatively chargeable and agents capable of controlling the toner to be positively chargeable. Examples of the agents capable of controlling the toner to be negatively chargeable include polymers having a sulfo or sulfonate group, copolymers having a sulfo or sulfonate group, salicylic acid derivatives, metal complexes of the salicylic acid derivatives, monoazo metal compounds, acetylacetone metal compounds, aromatic oxycarboxylic acids, aromatic monocarboxylic acids, aromatic polycarboxylic acids, metal salts of these acids, anhydrides of these acids, esters of these acids, phenol derivatives such as bisphenols, urea derivatives, metal-containing naphthoic compounds, boron compounds, quaternary ammonium salts, calixarenes, and resin-based charge control agents.

Examples of the agents capable of controlling the toner to be positively chargeable include nigrosine; products obtained by modifying nigrosine with aliphatic metal salts or other salts; guanidine compounds; imidazole compounds; quaternary ammonium salts such as benzyltributylammonium 4- hydroxynaphthalene- 1- sulfonate and tetrabutylammonium tetrafluoroborate; onium salts, such as phosphonium salts, similar to the quaternary ammonium salts; lake pigments derived from the quaternary ammonium salts; lake pigments derived from the onium salts; triphenylmethane dyes; lake pigments derived from the triphenylmethane dyes with a laking agent such as phosphotungstic acid, phosphomolybdic acid, phosphotungstomolybdic acid, tannic acid, lauric acid, gallic acid, a ferricyanide, or a ferrocyanide; and resin- based charge control agents. These substances may be used alone or in combination.

According to aspects of the present invention, a polar resin such as a polyester resin or a polycarbonate resin can be used. In the case of directly producing the toner by, for example, suspension polymerization or the like, the use of the polar resin during a polymerization reaction carried out in a dispersing step and a polymerizing step is effective in controlling the toner mother particles to be coated with the polar resin and/or to have a gradient from the surface to the center of each toner mother particle depending on the balance in polarity between a polymerizable monomer composition for forming the toner mother particles and an aqueous dispersion medium. When the polar resin has an interaction with the pigment according to the present invention and/or the charge control agent, the pigment according to the present invention can be well maintained in the toner.

The toner may contain inorganic microparticles, serving as a flow improver, attached to the toner mother particles. Examples of the inorganic microparticles include silica microparticles; titanium oxide microparticles; alumina microparticles; and microparticles of composite oxides containing silicon, titanium, and/or aluminum. These microparticles may be surface-treated.

A yellow toner according to the present invention has a weight-average particle size D4 of 4.0 to 8.0 $\mu$m. The ratio of the weight-average particle size D4 to the number-average particle size D1 of the yellow toner according to aspects of the present invention may be 1.35 or less. The ratio of the weight-average particle size D4 to the number-average particle size D1 of the yellow toner according to aspects of the present invention is hereinafter referred to as the D4/D1 ratio. It may even be that the weight-average particle size D4 be 4.9 to 7.5 $\mu$m and the D4/D1 ratio be 1.30 or less. When the weight-average particle size D4 is less than 4.0 $\mu$m, fog and/or a reduction in transferability is caused. When the weight-average particle size D4 and the D4/D1 ratio are as described above, a high-resolution image can be obtained because fog can be suppressed, good transferability can be achieved, and scattering can be prevented from occurring in letters or line images.

The weight-average particle size D4 and number-average particle size D1 of the yellow toner according to aspects of the present invention depend on a process for producing the toner mother particles. For a suspension polymerization process which is one of the processes useful in producing the yellow toner according to aspects of the present invention, the weight-average particle size D4 and number-average particle size D1 thereof can be adjusted by controlling the concentration of a dispersant used to prepare the aqueous dispersion medium, the agitation speed of a reaction mixture, the agitation time of the reaction mixture, or the like.

The yellow toner according to the present invention may have an average sphericity of 0.960 to 0.995 and even 0.970 to 0.990 as determined with a flow-type particle image analyzer because the yellow toner according to the present invention has greatly enhanced transferability.

The toner mother particles may be produced by any process and may be formed in an aqueous medium by a suspension polymerization process, an emulsion polymerization process, or a suspension granulation process. In the case of producing the toner mother particles by a common pulverization process, it is extremely technically difficult to add a large amount of the wax component to the toner mother particles in view of development. The formation of the toner mother particles in the aqueous medium allows the wax component to be absent from the surfaces of the toner mother particles even if a large amount of the wax component is used. In particular, the suspension polymerization process may be provided in view of long-term development stability and production cost because the wax component is contained in the toner mother particles and no solvent is used. The precise control of the morphology of the toner mother particles allows the toner mother particles to contain the same amount of a colorant. Therefore, the toner mother particles have uniform electrostatic properties due to the colorant. This allows the developability and transferability of the toner to be well balanced.

The toner mother particles are produced by the suspension polymerization process as follows: a polymerizable monomer composition is prepared by mixing the polymerizable monomer, the pigment according to the present invention, the wax component, and a polymerization initiator together; particles of the polymerizable monomer composition are formed by dispersing the polymerizable monomer composition in the aqueous medium, and the polymerizable monomer in the polymerizable monomer composition particles is polymerized in the aqueous medium. The polymerizable monomer composition is preferably prepared in such a manner that a dispersion prepared by dispersing the colorant in a first polymerizable monomer is mixed with a second polymerizable monomer. That is, after the pigment according to aspects of the present invention is sufficiently dispersed in the first polymerizable monomer, the pigment according to aspects of the present invention and the first polymerizable monomer are mixed with the second polymerizable monomer and

other toner materials. This allows the pigment according to aspects of the present invention to be well dispersed in the toner mother particles. Since the pigment according to aspects of the present invention meets conditions specified herein, the increase of the viscosity of the dispersion viscosity can be well suppressed. When the dispersion viscosity needs to be suppressed to a low level, a large amount of the pigment according to aspects of the present invention may be dispersed in the first polymerizable monomer.

Various analytical techniques used herein are described below.

The pigment according to aspects of the present invention is analyzed by powder X-ray diffractometry. In particular, the pigment according to aspects of the present invention is measured at a Bragg angle ($2\theta \pm 0.20$ degree) of three to 35 degrees with a powder X-ray diffractometer, RINT 2100, available from Rigaku Corporation using a $CuK\alpha$ characteristic X-ray, whereby a spectrum is obtained. The intensity ratio of a peak at a Bragg angle of 10.0 degrees to a peak at a Bragg angle of 11.1 degrees is calculated from the spectrum.

The viscosity of the pigment dispersion is determined in such a manner that the pigment dispersion is tested with a viscoelastometer, Physica MCR300, available from Anton Paar GmbH at a shear rate of 0 to 100 $s^{-1}$. The viscoelastometer includes a cone plate-type measurement jig having a diameter of 75 mm and a cone angle of 1°. Table 2 shows viscosities determined at a shear rate of 10 $s^{-1}$.

The number-average particle size D1 and weight-average particle size D4 of the toner mother particles are determined from particle size distribution analysis by the Coulter method. The toner mother particles are measured with an analyzer, Coulter Counter TA-II or Coulter Multisizer II, available from Coulter Corporation in accordance with the operation manual of the analyzer. An electrolytic solution used is an about 1% aqueous sodium chloride solution prepared from first-grade sodium chloride. For example, a solution, ISOTON-II, available from Coulter Scientific Japan can be used. In particular, 0.1 to 5 ml of a surfactant serving as a dispersant and 2 to 20 mg of a sample (the toner mother particles) are added to 100 to 150 ml of the electrolytic solution. The surfactant may be an alkylbenzenesulfonate. The electrolytic solution in which the sample is suspended is subjected to dispersion treatment for about one to three minutes using an ultrasonic disperser, whereby a dispersion is obtained.

The dispersion is measured with the analyzer, which is equipped with a 100-μm aperture, whereby the volume and number of the toner mother particles having a size of 2.00 μm or more are determined. The volume distribution and size distribution of the toner mother particles are calculated. The number-average particle size D1 and weight-average particle size D4 of the toner mother particles and the D4/D1 ratio are determined from the volume distribution and size distribution thereof. The following 13 channels are used to determine the number-average particle size D1 and weight-average particle size D4 thereof: a channel with a diameter of 2.00 to 2.52 μm, a channel with a diameter of 2.52 to 3.17 μm, a channel with a diameter of 3.17 to 4.00 μm, a channel with a diameter of 4.00 to 5.04 μm, a channel with a diameter of 5.04 to 6.35 μm, a channel with a diameter of 6.35 to 8.00 μm, a channel with a diameter of 8.00 to 10.08 μm, a channel with a diameter of 10.08 to 12.70 μm, a channel with a diameter of 12.70 to 16.00 μm, a channel with a diameter of 16.00 to 20.20 μm, a channel with a diameter of 20.20 to 25.40 μm, a channel with a diameter of 25.40 to 32.00 μm, and a channel with a diameter of 32.00 to 40.30 μm. The median diameter of each channel is taken as the representative diameter of the channel.

A flow-type particle image analyzer, FPIA-2100, available from Toa Medical Electronics Co., Ltd. is used to measure the toner mother particles. The average sphericity of the toner mother particles is calculated using the following equations:

$$\text{equivalent circle diameter} = (\text{particle projected area} / \pi)^{1/2} \times 2$$

and

$$\text{sphericity} = (\text{the circumference of a circle having the same area as the particle projected area}) / (\text{perimeter of a projected particle image}),$$

wherein the term "particle projected area" is defined as the binary area of a toner particle and the term "perimeter of a projected particle image" is defined as the length of the outline obtained by connecting edge points of the projected image of the toner particle. Sphericity is a measure of how spherical a particle is. A completely spherical particle has a

sphericity of 1.000. A particle with a complicated surface profile has a small sphericity.

Examples

Example 1

In 200 mass parts of water, 41.8 mass parts of dimethyl aminoterephthalate was dispersed. To the dispersion, 70 mass parts of a 31% aqueous solution of HCl was added, followed by mixing at 10°C for one hour. To the mixture, 35 mass parts of a 40% aqueous solution of sodium nitrite was added, followed by mixing for 1.5 hours. Sulfamic acid was added to this mixture, whereby an excessive amount of nitric acid was decomposed. The resulting mixture was adjusted to a pH of 4.5 with 4 mol/L sodium acetate while being ice-cooled, whereby a diazonium salt solution was prepared.

To 450 mass parts of water, 430 mass parts of a 33% aqueous solution of NaOH was added. To the diluted solution, 27.6 mass parts of 1, 4- bis (acetoacetylamino) benzene was added while the diluted solution was being agitated, whereby 1, 4- bis (acetoacetylamino) benzene was dissolved therein. To this solution, 170 mass parts of ice was added. To this mixture, 263 mass parts of glacial acetic acid was added while this mixture was being agitated, whereby a coupler solution was prepared.

The coupler solution was added dropwise to the diazonium salt solution over 40 minutes while the diazonium salt solution was being agitated, whereby a coupling reaction was carried out. The reaction mixture was agitated for two hours.

An obtained colorant slurry was heated to 98°C with steam, agitated at 98°C for one hour, and then filtered. The filter cake was washed with water, whereby a colorant paste was obtained. The colorant paste was dispersed in methanol. The dispersion was agitated for two hours and then filtered. This filter cake was washed with water, vacuum-dried at 80°C, and then pulverized, whereby an untreated pigment represented by Formula (1) was obtained.

The untreated pigment was heat-treated at 180°C for 24 hours in o-dichlorobenzene, followed by filtration. This filter cake was washed with methanol, vacuum-dried at 80°C, and then pulverized, whereby Pigment 1 was obtained. Results obtained by analyzing Pigment 1 by powder X-ray diffractometry were summarized in Table 1 below.

Table 1

| 2θ | Intensity | Relative intensity |
|---|---|---|
| 5.5° | Medium | 25% |
| 10.0° | Medium | 33% |
| 11.1° | Strong | 45% |
| 16.6° | Medium | 26% |
| 17.3° | Weak | 8% |
| 19.3° | Medium | 18% |
| 21.8° | Weak | 13% |
| 26.8° | Strong | 100% |

Examples 2 and 3

Pigments 2 and 3 were prepared in substantially the same manner as that described in Example 1 except that the treatment times of untreated pigments were as shown in Table 4. Pigments 2 and 3 were analyzed by powder X-ray diffractometry in the same manner as that described in Example 1. The intensity ratio of an 11.1 degree peak to a 10.0 degree peak was determined from the analysis results. The analysis results were summarized in Table 4.

Example 4

Commercially available C. I. Pigment Yellow 155, that is, Toner Yellow 3GP available from Clariant (Japan) K.K. was heat-treated at 160°C for three hours in o-dichlorobenzene, whereby Pigment 4 was obtained. Pigment 4 was analyzed by powder X-ray diffractometry in the same manner as that described in Example 1. The intensity ratio of an 11.1 degree peak to a 10.0 degree peak was determined from the analysis results. The analysis results were summarized in Table 4.

Examples 5, 7, and 8

Pigments 5, 7, and 8 were prepared in substantially the same manner as that described in Example 4 except that solvents used and the treatment times of untreated pigments were as shown in Table 4. Pigments 5, 7, and 8 were analyzed by powder X-ray diffractometry in the same manner as that described in Example 4. The intensity ratio of an 11.1 degree peak to a 10.0 degree peak was determined from the analysis results. The analysis results were summarized in Table 4.

Example 6

Commercially available C. I. Pigment Yellow 155, that is, Novoperm Yellow 4G available from Clariant (Japan) K.K. was heat-treated at 180°C for three hours in o-dichlorobenzene, whereby Pigment 6 was obtained. Pigment 6 was analyzed by powder X-ray diffractometry in the same manner as that described in Example 1. The intensity ratio of an 11.1 degree peak to a 10.0 degree peak was determined from the analysis results. The analysis results were summarized in Table 4.

Comparative Example 1

In 200 mass parts of water, 41.8 mass parts of dimethyl aminoterephthalate was dispersed. To the dispersion, 70 mass parts of a 31% aqueous solution of HCl was added, followed by mixing at 10°C for one hour. To the mixture, 35 mass parts of a 40% aqueous solution of sodium nitrite was added, followed by mixing for 1.5 hours. Sulfamic acid was added to this mixture, whereby an excessive amount of nitric acid was decomposed. The resulting mixture was adjusted to a pH of 4.5 with 4 mol/L sodium acetate while being ice-cooled, whereby a diazonium salt solution was prepared.

To 450 mass parts of water, 430 mass parts of a 33% aqueous solution of NaOH was added. To the diluted solution, 27.6 mass parts of 1, 4- bis (acetoacetylamino) benzene was added while the diluted solution was being agitated, whereby 1, 4- bis (acetoacetylamino) benzene was dissolved therein. To this solution, 170 mass parts of ice was added. To this mixture, 263 mass parts of glacial acetic acid was added while this mixture was being agitated, whereby a coupler solution was prepared.

The coupler solution was added dropwise to the diazonium salt solution over 40 minutes while the diazonium salt solution was being agitated, whereby a coupling reaction was carried out. The reaction mixture was agitated for two hours.

An obtained colorant slurry was heated to 98°C with steam, agitated at 98°C for one hour, and then filtered. The filter cake was washed with water, whereby a colorant paste was obtained. The colorant paste was dispersed in methanol. The dispersion was agitated for two hours and then filtered. This filter cake was washed with water, vacuum-dried at 80°C, and then pulverized, whereby Pigment 9, represented by Formula (1), for comparison was obtained. Results obtained by analyzing Pigment 9 by powder X-ray diffractometry were summarized in Table 2 below. The results showed no 11.1 degree peak.

Table 2

| 2θ | Intensity | Relative intensity |
|---|---|---|
| 10.0° | Strong | 59% |
| 16.7° | Medium | 31% |
| 20.6° | Medium | 35% |
| 26.8° | Strong | 100% |

Comparative Example 2

In 200 mass parts of water, 41.8 mass parts of dimethyl aminoterephthalate was dispersed. To the dispersion, 70 mass parts of a 31% aqueous solution of HCl was added, followed by mixing at 10°C for one hour. To the mixture, 35 mass parts of a 40% aqueous solution of sodium nitrite was added, followed by mixing for 1.5 hours. Sulfamic acid was added to this mixture, whereby an excessive amount of nitric acid was decomposed. The resulting mixture was adjusted to a pH of 4.5 with 4 mol/L sodium acetate while being ice-cooled. To the resulting mixture, an emulsion prepared by mixing ten mass parts of o-dichlorobenzene and one mass parts of a surfactant, Emulgen 911, available from Kao Corporation with an appropriate amount water was added, whereby a diazonium salt solution was prepared.

To 450 mass parts of water, 430 mass parts of a 33% aqueous solution of NaOH was added. To the diluted solution, 27.6 mass parts of 1, 4- bis (acetoacetylamino) benzene was added while the diluted solution was being agitated, whereby 1, 4- bis (acetoacetylamino) benzene was dissolved therein. To this solution, 170 mass parts of ice was added. To this mixture, 263 mass parts of glacial acetic acid was added while this mixture was being agitated, whereby a coupler solution was prepared.

The coupler solution was added dropwise to the diazonium salt solution over 40 minutes while the diazonium salt solution was being agitated, whereby a coupling reaction was carried out. The reaction mixture was agitated for two hours. The reaction mixture was further agitated at 80°C for one hour and then filtered. The filter cake was washed with cool water and then vacuum-dried, whereby an untreated pigment represented by Formula (1) was obtained.

To 71.6 mass parts of the untreated pigment, 570 mass parts of dimethylformamide was added. The mixture was agitated at 150°C for three hours, cooled to 80°C, and then filtered. The filter cake was washed with methanol, dried, and then pulverized, whereby Pigment 10 for comparison was obtained. Results obtained by analyzing Pigment 10 by powder X-ray diffractometry were summarized in Table 3 below. The results showed that the intensity ratio of an 11.1 degree peak to a 10.0 degree peak was 0.37.

Table 3

| 2θ | Intensity | Relative intensity |
|---|---|---|
| 5.5° | Weak | 13% |
| 10.0° | Strong | 61% |
| 11.1° | Medium | 23% |
| 16.7° | Medium | 21% |
| 17.6° | Weak | 13% |
| 19.2° | Medium | 26% |
| 21.7° | Weak | 19% |
| 26.8° | Strong | 100% |

Comparative Example 3

An untreated pigment represented by Formula (1) was prepared in the same manner as that described in Comparative Example 1.

To 71.0 mass parts of the untreated pigment, 570 mass parts of dimethylformamide was added. The mixture was agitated at 150°C for five hours, cooled to 80°C, and then filtered. The filter cake was washed with methanol, dried, and then pulverized, whereby Pigment 11 for comparison was obtained. Pigment 11 was analyzed by powder X-ray diffractometry in the same manner as that described in Example 1. The intensity ratio of an 11.1 degree peak to a 10.0 degree peak was determined from the analysis results. The analysis results were summarized in Table 4.

Comparative Example 4

Pigment 12 was prepared in substantially the same manner as that described in Comparative Example 3 except that an untreated pigment was heat-treated at 135°C for three hours in o-dichlorobenzene. Pigment 12 was analyzed by powder X-ray diffractometry in the same manner as that described in Example 1. The intensity ratio of an 11.1 degree peak to a 10.0 degree peak was determined from the analysis results. The analysis results were summarized in Table 4.

Comparative Examples 5 to 9

Pigments 13 to 17 were prepared in substantially the same manner as that described in Example 4 except that solvents used and the treatment times of untreated pigments were as shown in Table 4. Pigments 13 to 17 were analyzed by powder X-ray diffractometry in the same manner as that described in Example 4. The intensity ratio of an 11.1 degree peak to a 10.0 degree peak was determined from the analysis results. The analysis results were summarized in Table 4.

Table 4 shows the analysis results of the pigments prepared as described above and also shows the analysis results of Toner Yellow 3GP and Novoperm Yellow 4G both available from Clariant (Japan) K.K.

Table 4

| | pigments | Treatment | | | Results |
|---|---|---|---|---|---|
| | | Solvents | Temperature (°C) | Time (h) | 11.1°/10.0° |
| Example 1 | 1 | o-dichlorobenzene | 180 | 24 | 1.36 |
| Example 2 | 2 | o-dichlorobenzene | 180 | 3 | 0.84 |
| Example 3 | 3 | o-dichlorobenzene | 180 | 16 | 1.08 |
| Example 4 | 4 | o-dichlorobenzene | 160 | 3 | 0.72 |
| Example 5 | 5 | m-dichlorobenzene | 180 | 24 | 0.75 |
| Example 6 | 6 | o-dichlorobenzene | 180 | 3 | 0.85 |
| Example 7 | 7 | 1,2,4-trichlorobenzene | 160 | 24 | 0.99 |
| Example 8 | 8 | 1,2-dichloro-4-methylbenzene | 160 | 24 | 0.95 |
| Comparative Example 1 | 9 | - | - | - | No 11.1° peak |
| Comparative Example 2 | 10 | N,N-dimethylformamide | 150 | 3 | 0.37 |
| Comparative Example 3 | 11 | N,N-dimethylformamide | 150 | 5 | 0.36 |
| Comparative Example 4 | 12 | o-dichlorobenzene | 135 | 3 | 0.31 |
| Comparative Example 5 | 13 | N-methylpyrrolidone | 180 | 24 | 0.38 |
| Comparative Example 6 | 14 | Diethylene glycol monomethyl ether | 180 | 24 | 0.41 |
| Comparative Example 7 | 15 | Dodecane | 180 | 24 | 0.45 |
| Comparative Example 8 | 16 | N,N-dimethylformamide | 150 | 24 | 0.38 |
| Comparative Example 9 | 17 | Nitrobenzene | 180 | 24 | 0.37 |
| Toner Yellow 3GP | 18 | - | - | - | No 11.1° peak |
| Novoperm Yellow 4G | 19 | - | - | - | 0.39 |

As is clear from Table 4, a pigment having an 11.1 degree peak-to-10.0 degree peak intensity ratio of 0.7 or more as determined by CuKα characteristic X-ray diffraction can be obtained in the case of using a halogenated aromatic solvent such as dichlorobenzene at a treatment temperature of 160°C or higher. In Comparative Example 4, no pigment having such a ratio can be obtained despite the use of the halogenated aromatic solvent because the reaction temperature is low. Comparative Examples 5 to 9 shows that no pigment having such a ratio can be obtained using a solvent other than the halogenated aromatic solvent even if the reaction temperature is 160°C or higher.

Example 9

Pigment Dispersion a was prepared in such a manner that 12 mass parts of Pigment 1 and 120 mass parts of a styrenic monomer were mixed for three hours with an attritor manufactured by Mitsui Mining.

Examples 10 to 13

Pigment Dispersions b to e were prepared in substantially the same manner as that described in Example 9 except that Pigments 2 to 5 were used instead of Pigment 1.

Example 14

Pigment Dispersion f was prepared in such a manner that 12 mass parts of Pigment 1 and 180 mass parts of ethyl acetate were mixed for three hours with an attritor manufactured by Mitsui Mining.

Comparative Examples 10 to 14, 16, and 17

Pigment Dispersions *g* to *k, m,* and n for comparison were prepared in substantially the same manner as that described in Example 9 except that Pigments 9 to 12, 16, 18, and 19 were used instead of Pigment 1.

Comparative Example 15

Pigment Dispersion *l* for comparison was prepared in substantially the same manner as that described in Example 14 except that Pigment 9 was used instead of Pigment 1.

The pigment dispersions were evaluated for viscosity in accordance with the following standards:

A: a pigment dispersion with a viscosity of less than 1,000 mPa·s,
B: a pigment dispersion with a viscosity of 1,000 to less than 1,500 mPa·s, and
C: a pigment dispersion with a viscosity of 1,500 mPa·s or more.
A pigment dispersion with a viscosity of less than 1,000 mPa·s was judged to be good in handling.

The pigment dispersions were each applied to a sheet of art paper by a bar-coating process (Bar No. 10). The art paper sheet was air-dried for one day and then measured for image density OD(Y) with a Macbeth reflection densitometer, RD918, available from Macbeth Corporation. The pigment dispersions were evaluated for tinting strength in accordance with the following standards:

A: a sheet of art paper, coated with a pigment dispersion, having an image density OD(Y) of 1.60 or more;
B: a sheet of art paper, coated with a pigment dispersion, having an image density OD(Y) of 1.50 to less than 1.60; and
C: a sheet of art paper, coated with a pigment dispersion, having an image density OD(Y) of less than 1.50 A pigment dispersion exhibiting an image density OD(Y) of 1.50 or more was judged to be good in tinting strength.

Conditions for preparing the pigment dispersions and results obtained by evaluating the pigment dispersions for viscosity and tinting strength were summarized in Table 5.

Table 5

| | Dispersions | Conditions | | | Evaluation | |
|---|---|---|---|---|---|---|
| | | Pigments | Solvent/pigment | Solvents | Viscosity | Tinting strength |
| Example 9 | a | 1 | 10 | Styrene | A(696) | A(1.71) |
| Example 10 | b | 2 | 10 | Styrene | A(977) | A(1.65) |
| Example 11 | c | 3 | 10 | Styrene | A(952) | A(1.67) |
| Example 12 | d | 4 | 10 | Styrene | B(1226) | A(1.63) |
| Example 13 | e | 5 | 10 | Styrene | B(1198) | A(1.63) |
| Example 14 | f | 1 | 15 | Ethyl acetate | B(1257) | A(1.70) |
| Comparative Example 10 | g | 9 | 10 | Styrene | C(2473) | A(1.66) |
| Comparative Example 11 | h | 10 | 10 | Styrene | A(968) | C(1.39) |
| Comparative Example 12 | i | 11 | 10 | Styrene | C(1984) | B(1.58) |
| Comparative Example 13 | j | 12 | 10 | Styrene | C(2008) | B(1.55) |
| Comparative Example 14 | k | 16 | 10 | Styrene | C(2031) | A(1.61) |
| Comparative Example 15 | l | 9 | 15 | Styrene | C(1861) | A(1.60) |

(continued)

| | Dispersions | Conditions | | | Evaluation | |
|---|---|---|---|---|---|---|
| | | Pigments | Solvent/pigment | Solvents | Viscosity | Tinting strength |
| Comparative Example 16 | m | 18 | 10 | Styrene | C(2513) | B(1.51) |
| Comparative Example 17 | n | 19 | 10 | Styrene | A(850) | C(1.39) |

Table 5 confirms that a pigment meeting conditions specified herein has a reduced viscosity and enhanced tinting strength.

Example 15

Into a four- necked 2- L flask equipped with a high- speed stirrer, TK- homomixer, available from Tokushu Kika Kogyo, 710 mass parts of ion- exchanged water and 450 mass parts of 0.1 mol/L aqueous solution of $Na_3PO_4$ were poured. The diluted $Na_3PO_4$ solution was agitated at a rotational speed of 12, 000 rpm and heated to 60°C. To the diluted $Na_3PO_4$ solution, 68 mass parts of 1.0 mol/L aqueous solution of $CaCl_2$ was slowly added, whereby an aqueous dispersion medium containing microparticles of $Ca_3 (PO_4)_2$, which serves as a water- insoluble dispersion stabilizer, was prepared. The following materials were mixed: 132 mass parts of Pigment Dispersion a; 46 mass parts of a styrene monomer; 34 mass parts of an n- butyl acrylate monomer; two mass parts of an aluminum salicylate compound, Bontron E- 88, available from Orient Chemical Industries Co., Ltd.; ten mass parts of a polar resin; 25 mass parts of an ester wax having a number- average molecular weight of 704 and a maximum endothermic peak at 70°C as determined by differential scanning calorimetry (DSC) ; and 0.1 mass part of a divinylbenzene monomer. The polar resin was a polymer, produced by condensing propylene oxide- modified bisphenol- A with isophthalic acid, having a glass transition temperature of 65°C, a weight- average molecular weight of 10, 000, and a number- average molecular weight of 6, 000.
The mixture was heated to 60°C and stirred with the high- speed stirrer at a rotational speed of 5, 000 rpm. In the mixture, ten mass parts of 2, 2'- azobis (2, 4- dimethylvaleronitrile), which serves as a polymerization initiator, was dissolved, whereby a polymerizable monomer composition was prepared. The polymerizable monomer composition was added to the aqueous dispersion medium. Granular polymerization was carried out for 15 minutes while the polymerizable monomer composition and the aqueous dispersion medium were being mixed at a rotational speed of 12, 000 rpm. The high-speed stirrer was replaced with a propeller blade stirrer. Granular polymerization was continued for five hours while the inner temperature of the flask was maintained at 60°C. After the inner temperature of the flask was increased to 80°C, granular polymerization was continued for eight hours. After granular polymerization was terminated, remaining monomers were distilled off from the reaction mixture at 80°C under vacuum conditions. The resulting reaction mixture was cooled to 30°C, whereby a polymer microparticle dispersion was obtained.

The polymer microparticle dispersion was transferred to a washing vessel. Dilute hydrochloric acid was added to the polymer microparticle dispersion while the polymer microparticle dispersion was being stirred, whereby the polymer microparticle dispersion was adjusted to a pH of 1.5. The resulting polymer microparticle dispersion was stirred for two and half hours, whereby compounds, produced from phosphoric acid and calcium, including $Ca_3(PO_4)_2$ were dissolved. The resulting polymer microparticle dispersion was filtered through a filter, whereby polymer microparticles were obtained. The polymer microparticles were mixed with water, whereby a dispersion was prepared. The dispersion was filtered through a filter, whereby polymer microparticles were separated from water. The polymer microparticles were repeatedly treated by this procedure until the compounds, produced from phosphoric acid and calcium, including $Ca_3(PO_4)_2$ were sufficiently removed from the polymer microparticles. After the polymer microparticles were finally treated, the polymer microparticles were sufficiently dried, whereby Yellow Toner Mother Particles A were obtained.

Yellow Toner A was prepared in such a manner that the following particles were dry-mixed in a Henschel mixer available from Mitsui Mining for five minutes: 100 mass parts of Yellow Toner Mother Particles A; 1.0 mass parts of hydrophobic silica microparticles, surface-treated with hexamethyldisilazane, having a number-average primary particle size of 7 nm; 0.15 mass parts of rutile-type titanium dioxide microparticles having a number-average primary particle size of 45 nm; and 0.5 mass parts of rutile-type titanium dioxide microparticles having a number-average primary particle size of 200 nm.

Examples 16 to 19

Yellow Toners B to E were prepared in substantially the same manner as that described in Example 15 except

that Pigment Dispersions b to e were used instead of Pigment Dispersion a.

Example 20

Two hundred mass parts of a toner composition mixture liquid was prepared in such a manner that the following materials were mixed in a ball mill for 24 hours: 96 mass parts of Pigment Dispersion f; 84 mass parts of a polar resin; nine mass parts of a hydrocarbon wax; one mass part of an aluminum salicylate compound, Bontron E-88, available from Orient Chemical Industries Co., Ltd.; and ten mass parts of ethyl acetate, which serves as a solvent. The polar resin was an unsaturated polyester, produced by condensing propylene oxide-modified bisphenol-A with isophthalic acid, having a glass transition temperature of 75.9°C, a weight-average molecular weight of 11,000, a number-average molecular weight of 4,200, and an acid value of 11 mg-KOH/g. The hydrocarbon wax was a Fischer-Tropsch wax having a number-average molecular weight of 750 and a maximum endothermic peak at 80°C as determined by DSC.

An aqueous medium containing

carboxymethylcellulose was prepared in such a manner that the following materials were mixed in a ball mill for 24 hours: 20 mass parts of calcium carbonate particles coated with an acrylic copolymer; 0.5 mass parts of carboxymethylcellulose, Cellogen™ BS-H, available from Dai-ichi Kogyo Seiyaku Co., Ltd.; and 99.5 mass parts of ion-exchanged water. Into the TK-homomixer, 1,200 g of the aqueous medium was poured. To the aqueous medium, 1,000 g of the toner composition mixture liquid was added while the aqueous medium was being stirred with rotary blades rotating at a circumferential velocity of 20 m/s. The aqueous medium and the toner composition mixture liquid were mixed for one minute while being maintained at 25°C, whereby a suspension was obtained.

A vapor phase on the surface of the suspension was forcibly circulated with a blower in such a manner that 2,200 g of the suspension was stirred with full-zone blades, available from Shinko Pantec Co., Ltd., rotating at a circumferential velocity of 45 m/min and was maintained at 40°C, whereby the removal of ethyl acetate was started. After a lapse of 15 minutes from the start of the removal of ethyl acetate, 75 g of a 1% dilute aqueous ammonia solution, which serves as an ionic material, was added to the suspension. After a lapse of one hour from the start of the removal of ethyl acetate, 25 g of the ammonia solution was added to the resulting suspension. After a lapse of two hours from the start of the removal of ethyl acetate, 25 g of the ammonia solution was added to the resulting suspension. After a lapse of three hours from the start of the removal of ethyl acetate, 25 g of the ammonia solution was finally added to the resulting suspension. The amount of the ammonia solution added to the suspension was 150 g. The resulting suspension was maintained at 40°C for 17 hours since the start of the removal of ethyl acetate, whereby ethyl acetate was removed from suspended particles and thereby a toner dispersion was obtained.

To 300 mass parts of the toner dispersion, 80 mass parts of 10 mol/L of hydrochloric acid was added. After the resulting toner dispersion was neutralized with a 0.1 mol/L aqueous sodium hydroxide solution, the resulting toner dispersion was suction-filtered and the filter cake was then washed with ion-exchanged water four times, whereby a toner cake was obtained. The toner cake was dried in a vacuum dryer and then sieved through a screen with 45 $\mu$m openings, whereby Yellow Toner Mother Particles F were obtained. Yellow Toner F was prepared using Yellow Toner Mother Particles F in the same manner as that described in Example 15.

Example 21

The following materials were mixed, melted, and then kneaded in a two-shaft extruder: 100 mass parts of a binder resin; six mass parts of Pigment 1; nine mass parts of a hydrocarbon wax; and two mass parts of an aluminum salicylate compound, Bontron E-88, available from Orient Chemical Industries Co., Ltd. The binder resin was a copolymer, produced by copolymerizing styrene and n-butyl acrylate at a ratio of 75 to 25, having a glass transition temperature of 65°C, a weight-average molecular weight of 80,000, and a number-average molecular weight of 6,700.
The hydrocarbon wax was a Fischer-Tropsch wax having a number-average molecular weight of 750 and a maximum endothermic peak at 80°C as determined by DSC. The kneaded materials were cooled and then coarsely milled in a hammer mill. The coarsely milled materials were finely milled in a jet mill. The finely milled materials were classified, whereby Yellow Toner Mother Particles G were obtained. Yellow Toner G was prepared using Yellow Toner Mother Particles G in the same manner as that described in Example 15.

Comparative Examples 18 to 22

Yellow Toners H to L were prepared in substantially the same manner as that described in Example 15 except that Pigment Dispersion g to k were used instead of Pigment Dispersion a.

Comparative Example 23

Yellow Toner M was prepared in substantially the same manner as that described in Example 15 except that Pigment Dispersion *l* was used instead of Pigment Dispersion *f*.

Comparative Example 24

Yellow Toner N was prepared in substantially the same manner as that described in Example 21 except that Pigment 9 was used instead of Pigment 1.

The obtained yellow toners were evaluated for tinting strength and light resistance as described below. Each yellow toner was applied to sheets of transfer paper (75 $g/m^2$- paper) with a printer, LBP- 2510, available from CANON KABUSHIKI KAISHA in an environment having a temperature of 23.5°C and a relative humidity of 60%, whereby several types of solid images with a toner adhesion amount of 0.1 to 1.0 $mg/cm^2$ were formed on the transfer paper sheets. The solid images were measured for image density OD (Y) with a Macbeth reflection densitometer, RD918, available from Macbeth Corporation. The relationship between the amount of the yellow toner on each transfer paper sheet and the image density of a corresponding one of the solid images was determined. The yellow toners were relatively evaluated for tinting strength on the basis of the image density of a solid image, formed on one of the transfer paper sheets, having a toner adhesion amount of 0.5 $mg/cm^2$. The evaluation standards were as follows:

A: a solid image having an image density OD(Y) of 1.40 or more,
B: a solid image having an image density OD(Y) of 1.30 to less than 1.40, and
C: a solid image having an image density OD(Y) of less than 1.30.
A yellow toner capable of forming a solid image with an image density OD(Y) of 1.30 or more was judged to be good in tinting strength.

Each yellow toner was applied to sheets of transfer paper (75 $g/m^2$- paper) with a printer, LBP- 2510, available from CANON KABUSHIKI KAISHA in an environment having a temperature of 23.5°C and a relative humidity of 60%, whereby several types of solid images with a toner adhesion amount of 0.5 $mg/cm^2$ were formed on the transfer paper sheets. The solid images were subjected to an irradiation test using a whether meter, Atlas Weather- Ometer Ci4000, available from Toyo Seiki Seisaku- sho, Ltd. under the following conditions: an irradiation time of 100 hours, a black panel temperature of 50°C, a chamber temperature of 40°C, a relative humidity of 70%, and an irradiance of 0.39 $W/m^2$ at a wavelength of 340 nm. The untested and tested solid images were analyzed for chromaticity (L*, a*, b*) in the L*a*b* color system using an instrument, SpectroLino, available from GretagMacbeth. The color difference of each solid image was calculated from the following equation:

$$\text{Color difference } (\Delta E) = \{((\text{a* of the tested solid image}) - (\text{a* of the untested solid image}))^2 + ((\text{b* of the untested solid image}) - (\text{b* of the tested solid image}))^2 + ((\text{L* of the tested solid image}) - (\text{L* of the untested solid image}))^2\}^{1/2}.$$

The solid images were evaluated in accordance with the following standards:

A: a solid image with a color difference (ΔE) of less than three,
B: a solid image with a color difference (ΔE) of three to less than seven, and
C: a solid image with a color difference (ΔE) of seven or more.
A solid image with a color difference (ΔE) of less than seven was judged to be good in light resistance.

Conditions for preparing the yellow toners of Examples 15 to 21 and Comparative Examples 18 to 24 were summarized in Table 6.

Table 6

| | Toners | Conditions | | Morphology of toner particles | | | Evaluation | |
|---|---|---|---|---|---|---|---|---|
| | | Pigment dispersions | Producing processes | D4 (μm) | D4/D1 | Average sphericity | Tinting strength | Light fastness |
| Example 15 | A | a | Suspension Polymerization | 6.8 | 1.19 | 0.978 | A(1.45) | A(2.1) |
| Example 16 | B | b | Suspension Polymerization | 6.7 | 1.26 | 0.981 | A(1.42) | A(2.8) |
| Example 17 | C | c | Suspension Polymerization | 7.0 | 1.27 | 0.983 | A(1.43) | A(2.4) |
| Example 18 | D | d | Suspension Polymerization | 6.6 | 1.21 | 0.967 | A(1.41) | A(2.6) |
| Example 19 | E | e | Suspension Polymerization | 6.8 | 1.30 | 0.973 | A(1.41) | A(2.4) |
| Example 20 | F | f | Suspension granulation | 7.1 | 1.31 | 0.962 | A(1.41) | A(2.2) |
| Example 21 | G | - | Pulverization | 6.8 | 1.32 | 0.958 | B(1.38) | A(2.7) |
| Comparative Example 18 | H | g | Suspension Polymerization | 6.9 | 1.34 | 0.973 | C(1.24) | C(8.2) |
| Comparative Example 19 | I | h | Suspension Polymerization | 7.3 | 1.41 | 0.978 | C(1.22) | B(6.3) |
| Comparative Example 20 | J | i | Suspension Polymerization | 6.7 | 1.43 | 0.974 | C(1.23) | B(6.0) |
| Comparative Example 21 | K | j | Suspension Polymerization | 6.8 | 1.43 | 0.973 | C(1.24) | B(5.9) |
| Comparative Example 22 | L | k | Suspension Polymerization | 6.8 | 1.44 | 0.976 | C(1.26) | B(6.3) |
| Comparative Example 23 | M | l | Suspension granulation | 6.9 | 1.33 | 0.972 | C(1.24) | B(6.5) |
| Comparative Example 24 | N | - | Pulverization | 6.9 | 1.31 | 0.957 | C(1.21) | B(6.1) |

Accordingly, aspects of the present invention are capable of providing a pigment capable of preventing a dispersion prepared by dispersing the pigment in a dispersion medium such as an organic solvent from having an increased viscosity. The dispersion can be readily handled because of the use of the pigment. The pigment is highly dispersed in the dispersion medium. This results in the improvement of the dispersion of a colorant in toner mother particles and also results in the enhancement of the tinting strength of a toner.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. A pigment represented by the following formula, having a CuKa characteristic X-ray diffraction spectrum having, when $\theta$ represents a Bragg angle, a peak at $2\theta \pm 0.20$ degrees equal to 10.0 degrees and a peak at $2\theta \pm 0.20$ degrees equal to 11.1 degrees, the intensity ratio of the 11.1 degree peak to the 10.0 degree peak being 0.7 or more:

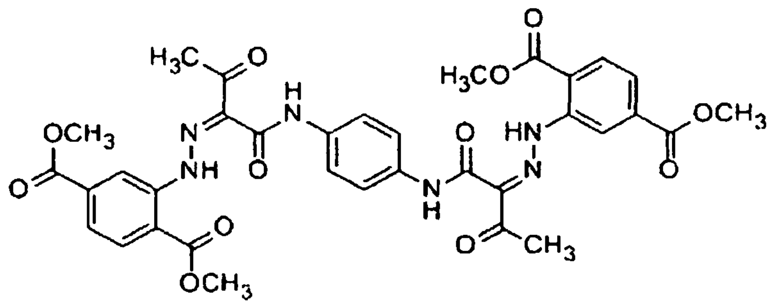

(1).

2. The pigment according to Claim 1, obtained by heat-treating a compound in a halogenated aromatic solvent at 160°C or higher, the compound being produced in such a manner that a compound represented by the following formula (2) is diazotized and then coupled with a compound represented by the following formula (3):

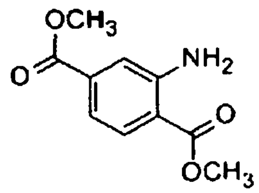

(2)

and

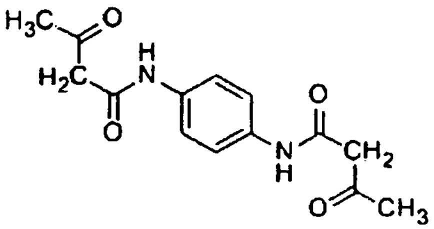

(3).

3. The pigment according to Claim 2, wherein the halogenated aromatic solvent is o-dichlorobenzene.

4. A method of producing the pigment according to Claim 1, comprising:

producing a compound in such a manner that a compound represented by the following formula (2) is diazotized and then coupled with a compound represented by the following formula (3); and
heat-treating the compound in a halogenated aromatic solvent at 160°C or higher:

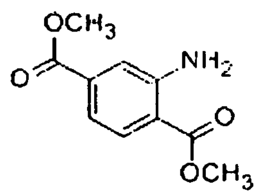

(2)

and

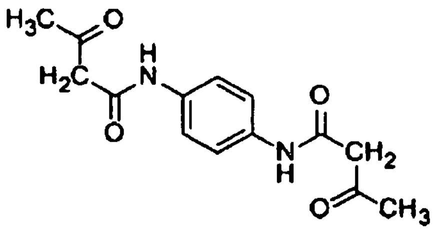

(3).

5. The method according to Claim 4, wherein the halogenated aromatic solvent is o-dichlorobenzene.

6. A pigment dispersion containing:

   the pigment according to Claim 1; and
   an organic solvent serving as a dispersion medium.

7. The pigment dispersion according to claim 6, wherein, for the organic solvent serving as the dispersion medium, at least one of
ketones such as acetone, methyl ethyl ketone, and methyl isobutyl ketone;
esters such as ethyl acetate, butyl acetate, ethyl propionate, and cellosolve acetate;
hydrocarbon solvents such as hexane, octane, petroleum ether, cyclohexane, benzene, toluene, and xylene; and
halogenated hydrocarbon solvents such as carbon tetrachloride, trichloroethylene, and tetrabromoethane is used.

8. A yellow toner containing yellow toner mother particles containing a binder resin, a colorant, and a wax component, wherein the colorant is the pigment according to Claim 1.

9. The yellow toner according to Claim 8, wherein the yellow toner mother particles are obtained in such a manner that a polymerizable monomer composition containing a polymerizable monomer, the colorant, and the wax component is dispersed in an aqueous medium; particles of the polymerizable monomer composition are formed; and the polymerizable monomer in the particles is polymerized.

**Patentansprüche**

1. Pigment der folgenden Formel, das ein charakteristisches Röntgenbeugungsspektrum der Cu Kα-Strahlung aufweist, das, wenn Θ für einen Braggwinkel steht, einen Peak bei 2Θ ± 0,20 Grad gleich 10,0 Grad und einen Peak bei 2Θ ± 0,20 Grad gleich 11,1 Grad hat, wobei das Verhältnis der Intensitäten des Peaks bei 11,1 Grad und des Peaks bei 10,0 Grad 0.7 oder mehr beträgt:

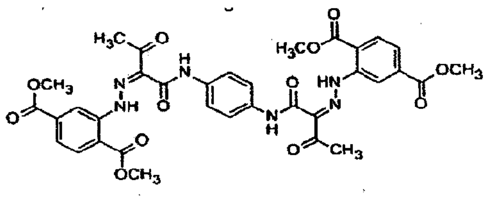

(1).

2. Pigment nach Anspruch 1, das durch Wärmebehandeln einer Verbindung in einem halogenierten aromatischen Lösungsmittel bei 160 °C oder mehr erhalten ist, wobei die Verbindung derart hergestellt ist, dass eine Verbindung mit der folgenden Formel (2) diazotiert und dann mit einer Verbindung mit der folgenden Formel (3) gekoppelt ist:

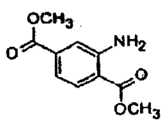

(2)

und

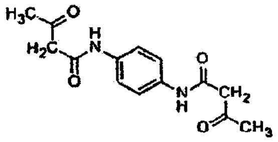

(3).

3. Pigment nach Anspruch 2, wobei das halogenierte aromatische Lösungsmittel o-Dichlorbenzol ist.

4. Verfahren zum Herstellen des Pigments nach Anspruch 1, umfassend:

Herstellen einer Verbindung derart, dass eine Verbindung mit der folgenden Formel (2) diazotiert und dann mit einer Verbindung mit der folgenden Formel (3) gekoppelt wird; und
Wärmebehandeln der Verbindung in einem halogenierten aromatischen Lösungsmittel bei 160 °C oder mehr:

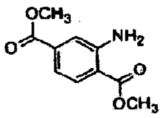

(2)

und

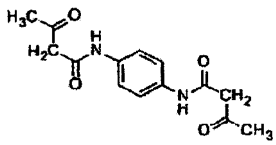

(3).

5. Verfahren nach Anspruch 4, wobei das halogenierte aromatische Lösungsmittel o-Dichlorbenzol ist.

6. Pigmentdispersion, die beinhaltet:

das Pigment nach Anspruch 1; und
ein als Dispersionsmedium dienendes organisches Lösungsmittel.

7. Pigmentdispersion nach Anspruch 6, wobei als organisches Lösungsmittel, das als Dispersionsmedium dient, zumindest eines der folgenden verwendet wird:

Ketone wie Aceton, Methylethylketon und Methylisobutylketon;
Ester wie Ethylacetat, Butylacetat, Ethylpropionat und Cellosolve-acetat;
Kohlenwasserstofflösungsmittel wie Hexan, Octan, Petrolether, Cyclohexan, Benzol, Toluol und Xylol; und halogenierte Kohlenwasserstofflösungsmittel wie Tetrachlorkohlenstoff, Trichlorethylen und Tetrabromethan.

8. Gelber Toner, der Stammpartikel eines gelben Toners beinhaltet, die ein Bindemittelharz, ein Färbemittel und eine Wachskomponente enthalten, wobei das Färbemittel das Pigment nach Anspruch 1 ist.

9. Gelber Toner nach Anspruch 8, wobei die Stammpartikel eines gelben Toners derart erhalten werden, dass eine polymerisierbare Monomerzusammensetzung, die ein polymerisierbares Monomer enthält, das Färbemittel und die Wachskomponente in einem wäßrigen Medium dispergiert werden, Partikel der polymerisierbaren Monomerzusammensetzung erzeugt werden und das polymerisierbare Monomer in den Partikeln polymerisiert wird.

## Revendications

1. Pigment représenté par la formule suivante, ayant un spectre de diffraction des rayons X caractéristique de CuK$\alpha$ comprenant, lorsque $\theta$ représente un angle de Bragg, un pic à 2 $\theta \pm$ 0,20 degré égal à 10,0 degrés et un pic à 2 $\theta$

± 0,20 degré égal à 11,1 degrés, le rapport d'intensités du pic à 11,1 degrés au pic à 10,0 degrés étant égal ou supérieur à 0,7 :

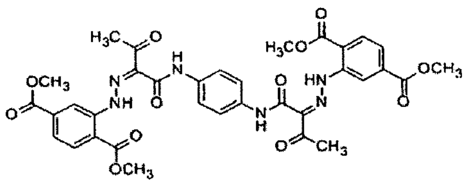

(1).

2. Pigment suivant la revendication 1, obtenu par traitement thermique d'un composé dans un solvant aromatique halogéné à 160°C ou plus, le composé étant produit de telle sorte qu'un composé représenté par la formule (2) suivante soit diazoté et ensuite couplé avec un composé représenté par la formule (3) suivante :

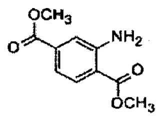

(2)

et

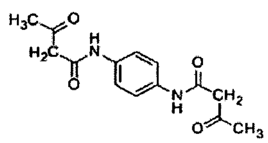

(3).

3. Pigment suivant la revendication 2, dans lequel le solvant aromatique halogéné est le o-dichlorobenzène.

4. Procédé de production du pigment suivant la revendication 1, comprenant :

la production d'un composé de telle sorte qu'un composé représenté par la formule (2) suivante soit diazoté et ensuite couplé avec un composé représenté par la formule (3) suivante ; et
le traitement thermique du composé dans un solvant aromatique halogéné à 160°C ou plus :

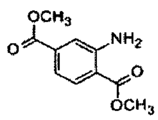

(2)

et

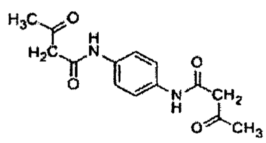

(3).

5. Procédé suivant la revendication 4, dans lequel le solvant aromatique halogéné est le o-dichlorobenzène.

6. Dispersion de pigments contenant :

le pigment suivant la revendication 1 ; et
un solvant organique servant de milieu de dispersion.

**7.** Dispersion de pigments suivant la revendication 6, dans laquelle, pour le solvant organique servant de milieu de dispersion, au moins un des suivants est utilisé :

des cétones telles que l'acétone, la méthyléthylcétone et la méthylisobutylcétone ;
des esters tels que l'acétate d'éthyle, l'acétate de butyle, le propionate d'éthyle et l'acétate de cellusolve ;
des solvants hydrocarbonés tels que l'hexane, l'octane, l'éther de pétrole, le cyclohexane, le benzène, le toluène et le xylène ; et
des solvants hydrocarbonés halogénés tels que le tétrachlorure de carbone, le trichloréthylène et le tétrabromoéthane.

**8.** Toner jaune contenant des particules mères de toner jaune contenant une résine servant de liant, une matière colorante et une cire, dans lequel la matière colorante est le pigment suivant la revendication 1.

**9.** Toner jaune suivant la revendication 8, dans lequel les particules mères de toner jaune sont obtenues de telle sorte qu'une composition de monomère polymérisable contenant un monomère polymérisable, la matière colorante et la cire soit dispersée dans un milieu aqueux ; des particules de la composition de monomère polymérisable soient formées , et le monomère polymérisable dans les particules soit polymérisé.

# FIGURE

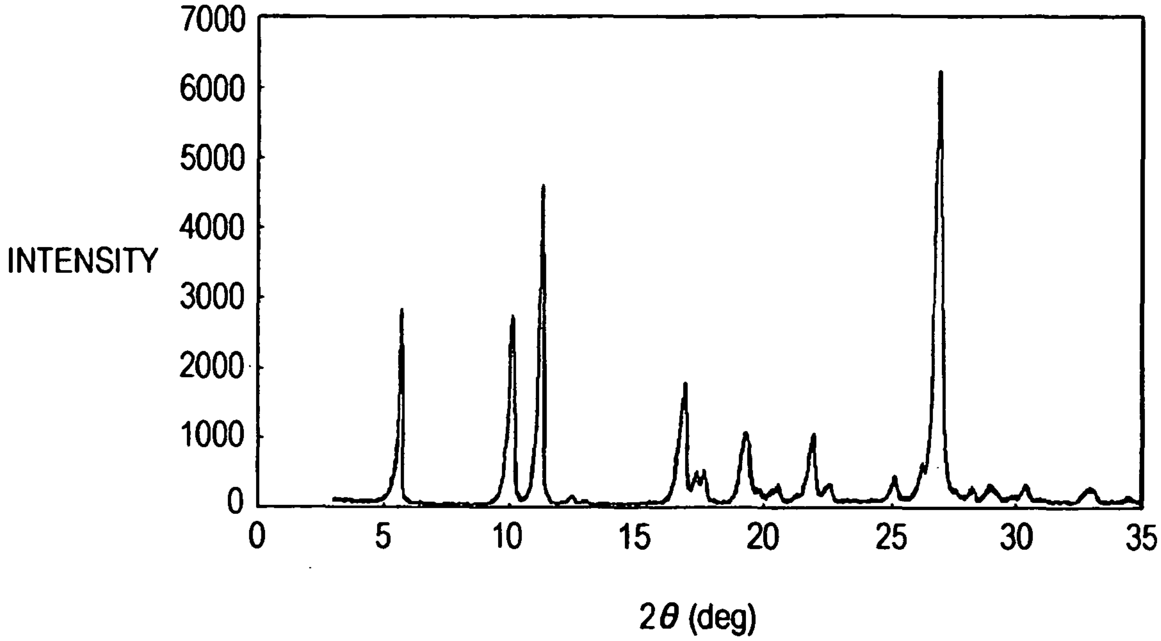
INTENSITY
7000
6000
5000
4000
3000
2000
1000
0
0
5
10
15
20
25
30
35
2θ (deg)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3917764 B
- GB 2239254 A
- US 4003886 A
- JP 2007262382 A


### Non-patent literature cited in the description


- Polymer Handbook. John Wiley & Sons Inc, vol. III, 139-192